Europäisches Patentamt

European Patent Office

Office européen des brevets

(19)

(11) Veröffentlichungsnummer: **0 024 575**
**A1**

(12) # EUROPÄISCHE PATENTANMELDUNG

(21) Anmeldenummer: 80104548.5

(22) Anmeldetag: 31.07.80

(51) Int. Cl.³: **H 02 K 15/09**
H 02 K 3/02, H 02 K 17/16

(30) Priorität: 14.08.79 DE 2932952

(43) Veröffentlichungstag der Anmeldung:
11.03.81 Patentblatt 81:10

(84) Benannte Vertragsstaaten:
AT CH DE FR GB IT LI NL SE

(71) Anmelder: SIEMENS AKTIENGESELLSCHAFT Berlin
und München
Postfach 22 02 61
D-8000 München 22(DE)

(72) Erfinder: Schreiner, Horst, Prof. Dr.
Siebenbürger Strasse 54
D-8500 Nürnberg(DE)

(72) Erfinder: Friedrich, Dieter, Dr.
Schlossgartenstrasse 22
D-8500 Nürnberg(DE)

(72) Erfinder: Wiench, Paul
Neumarkter Strasse 52
D-8500 Nürnberg(DE)

(54) Verfahren zum Herstellen von Kurzschlussläuferkäfigen.

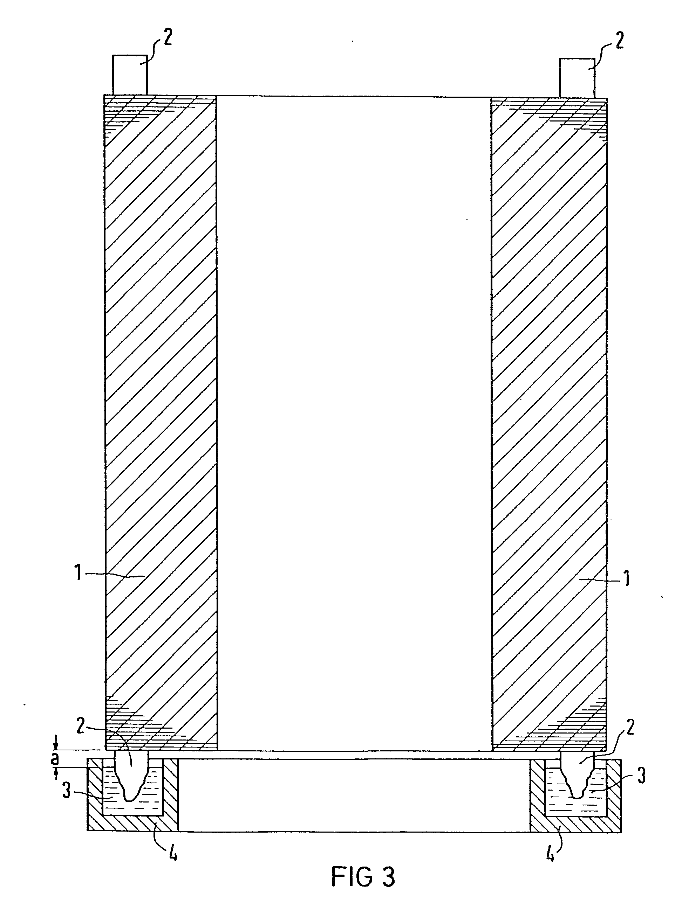

(57) Das zugrundeliegende technische Problem ist das Herstellen von Kurzschlußkäfigen für Läufer großer elektrischer Maschinen, insbesondere die Verbindung zwischen den im Läuferblechpaket angeordneten Kurzschlußstäben und den den Kurzschlußkäfig an beiden Läuferstirnseiten abschließenden Kurzschlußringen herzustellen. Bisher wurden durch Einpressen von Kupferprofilen in die dafür vorgesehene Nuten des Läuferblechpaketes und anschließendes Hartverlöten der über das Läuferblechpaket hinausragenden Kurzschlußstäbe mit vorgefertigten Kurzschlußringen die Läufer hergestellt. Als Werkstoff dienten vorzugsweise Kupfer bzw. Kupferlegierungen. Dieses bekannte Verfahren und die verwendeten Werkstoffe erbrachten erhebliche Fertigungskosten. Um diese Schwierigkeiten und Nachteile zu vermeiden, werden beim Verfahren gemäß der Erfindung die Enden der Kurzschlußstäbe in eine ringförmige Metallschmelze zentrisch eingetaucht. Die Temperatur der Metallschmelze wird so bemessen, daß die Enden der Kurzschlußstäbe angelöst werden und daß beim Erstarren der Metallschmelze ein Kurzschlußring ausgebildet wird, der die Stabenden miteinander verbindet. Als Werkstoff für den Käfig und die Metallschmelze werden Aluminium oder eine Aluminiumlegierung verwendet (Fig. 3).

EP 0 024 575 A1

./...

FIG 3

SIEMENS AKTIENGESELLSCHAFT      Unser Zeichen
Berlin und München             VPA 79 P 7 5 4 8 EUR

Verfahren zum Herstellen von Kurzschlußläuferkäfigen

Die Erfindung bezieht sich auf ein Verfahren zum Herstellen von Kurzschlußkäfigen für die Läufer elektrischer Maschinen, bei dem in Nuten von Blechpaketen Kurzschlußstäbe eingesetzt werden und die an den Stirnseiten des Käfigs über die Blechpakete hinausragenden Kurzschlußstäbe mit je einem Kurzschlußring miteinander verbunden werden.

Es ist bekannt, Kurzschlußkäfige für Läufer großer elektrischer Maschinen durch Einpressen von Kupferprofilen in die dafür vorgesehenen Nuten des Läuferblechpaketes und anschließendes Hartverlöten der über das Läuferblechpaket hinausragenden Kurzschlußstäbe mit vorgefertigten Kurzschlußringen herzustellen. Als Werkstoff der Kurzschlußstäbe und der Kurzschlußringe dienen vorzugsweise Kupfer bzw. Kupferlegierungen. Damit sind

Wb 2 Dm / 8.8.1979

hohe Werkstoffkosten verbunden.

Der Erfindung liegt die Aufgabe zugrunde, ein Verfahren zum Herstellen von Kurzschlußkäfigen für Läufer großer elektrischer Maschinen anzugeben, mit dem es möglich ist, durch Ersatz des Kupfers bzw. der Kupferlegierungen und durch Ersatz des bisher angewandten Verbindungsverfahrens die hohen Werkstoffkosten wesentlich einzuschränken.

Die Aufgabe wird gemäß der Erfindung dadurch gelöst, daß die Enden der Kurzschlußstäbe in eine ringförmige Metallschmelze zentrisch eingetaucht werden, derart, daß ein vorgegebener Abstand zwischen der Stirnseite des Blechpaketes und der Oberfläche der Metallschmelze eingehalten wird, daß die Temperatur der Metallschmelze so bemessen wird, daß die Enden der Kurzschlußstäbe angelöst werden und daß beim Erstarren der Metallschmelze ein Kurzschlußring ausgebildet wird, der die Stabenden miteinander verbindet.

Anhand der Zeichnung und eines Ausführungsbeispiels wird die Erfindung näher erläutert. Es zeigen:

Fig. 1    in schematischer Darstellung ein Läuferblechpaket mit eingeschobenen Kurzschlußstäben,

Fig. 2    in schematischer Darstellung ein Läuferblechpaket mit Kurzschlußstäben, deren Enden in einer Metallschmelze eingetaucht sind,

Fig. 3    in schematischer Darstellung ein Läuferblechpaket mit Kurzschlußstäben, deren Enden in der Metallschmelze teilweise angeschmolzen sind.

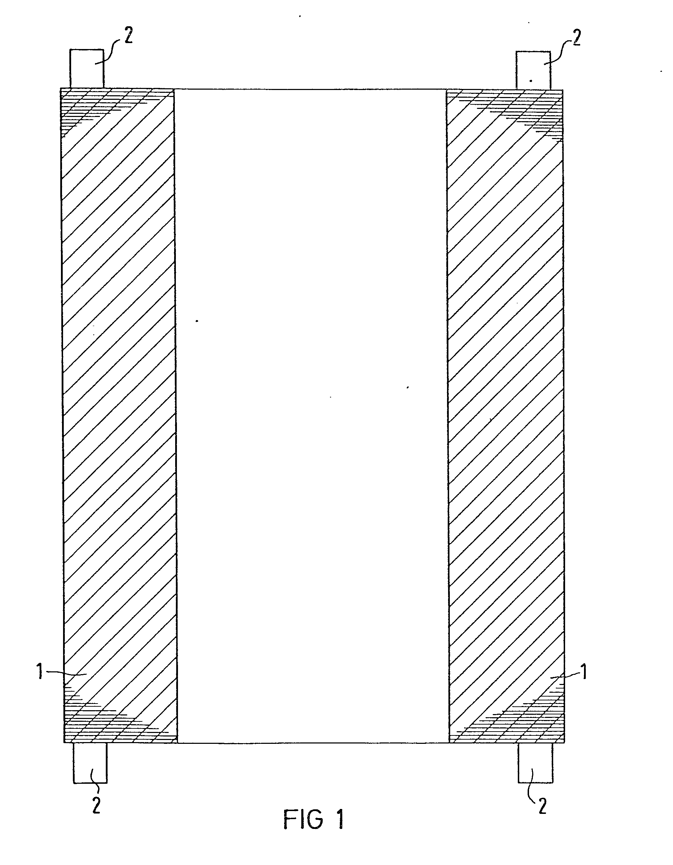

Fig. 1 zeigt schematisch ein Läuferblechpaket 1, in das die Kurzschlußstäbe 2 eingeschoben sind.

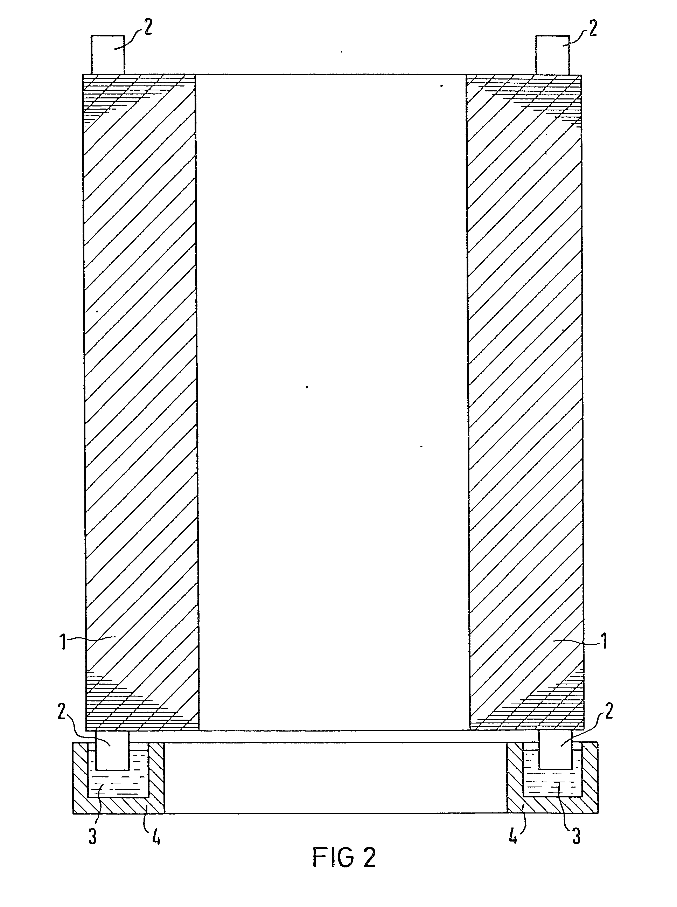

Fig. 2 zeigt schematisch, wie das mit Kurzschlußstäben 2 bestückte Läuferblechpaket 1 mit den auf der Unterseite herausragenden Stabenden mit einer Metallschmelze 3 in Berührung gebracht bzw. in diese eingetaucht wird. Die Metallschmelze 3 befindet sich in einer Ringform 4, dessen innere Abmessungen im wesentlichen denen des herzustellenden Kurzschlußringes entsprechen. Die Schmelze 3 in der Ringform 4 wird durch geeignete Einrichtungen, z.B. durch induktive, widerstandsbeheizte oder andere Beheizung erschmolzen und warmgehalten. Die Temperatur der Schmelze wird durch geeignete Temperaturmeßeinrichtungen, z.B. Thermoelementen, überwacht.

Die Herstellung der Verbindung zwischen Kurzschlußstäben und Kurzschlußring wird aus Fig. 3 ersichtlich. Eine vorgegebene Menge Aluminium wird in der Ringform 4 wegen der guten Wärmeeinbringung und der guten Regelmöglichkeit mittels induktiver Heizeinrichtung erschmolzen und auf eine vorbestimmte Temperatur erhitzt und warmgehalten. Das mit den Kurzschlußstäben 2 bestückte Läuferblechpaket 1 wird anschließend zentrisch in die Ringform 4 abgesenkt und zwar soweit, daß zwischen der ansteigenden Metallschmelze und der Stirnseite des Läuferblechpaketes 1 ein Abstand a eingehalten wird. Bei genügend hoher Temperatur der Aluminiumschmelze wird sich nun eine Anlösung der überstehenden Aluminiumstäbe 2 einstellen. Ziel ist es, in Abhängigkeit von der Wärmekapazität der Aluminiumstäbe, der Wärmeableitung durch das Blechpaket und den sonstigen Einflußgrößen wie Wärmeabstrahlung usw. ein Anlösen in der Weise zu erreichen, daß die eingetauchten Stäbe 2 mindestens querschnittsgleich an den Kurzschlußring angebunden werden. Die hierfür benötigte Dauer und Temperatur sind für den Einzelfall, d.h. für jeden Läufertyp, gesondert zu ermitteln. Nach Abschalten der Heizleistung wird die Schmelze innerhalb der Ringform 4 in kurzer Zeit, ähnlich normalem Kokillenguß, erstarren und so den Kurzschlußring ausbilden. Der Läufer kann anschließend aus der Ringform 4 entnommen, gewendet und für das Angießen des Kurzschlußringes auf der gegenüberliegenden Läuferseite vorbereitet werden.


2 Patentansprüche
3 Figuren

Patentansprüche

1. Verfahren zum Herstellen von Kurzschlußkäfigen für die Läufer elektrischer Maschinen, bei dem in Nuten von Blechpaketen Kurzschlußstäbe eingesetzt werden und die an den Stirnseiten des Käfigs über die Blechpakete hinausragenden Kurzschlußstäbe mit je einem Kurzschlußring miteinander verbunden werden, d a d u r c h   g e - k e n n z e i c h n e t , daß die Enden der Kurzschlußstäbe (2) in eine ringförmige Metallschmelze (3) zentrisch eingetaucht werden, derart, daß ein vorgegebener Abstand (a) zwischen der Stirnseite des Blechpaketes (1) und der Oberfläche der Metallschmelze (3) eingehalten wird, daß die Temperatur der Metallschmelze (3) so bemessen wird, daß die Enden der Kurzschlußstäbe (2) angelöst werden und daß beim Erstarren der Metallschmelze (3) ein Kurzschlußring ausgebildet wird, der die Stabenden (2) miteinander verbindet.

2. Verfahren nach Anspruch 1, d a d u r c h   g e - k e n n z e i c h n e t , daß für den Käfig und die Metallschmelze als Werkstoff Aluminium oder eine Aluminiumlegierung verwendet wird.

FIG 1

FIG 2

FIG 3

**Europäisches Patentamt**

# EUROPÄISCHER RECHERCHENBERICHT

EP 80 10 4548.5

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | DE - B - p 2073 VIIId/21d1 (SIEMENS SCHUCKERTWERKE)<br>bekannt gemacht 16.08.1951<br>* gesamtes Dokument *<br>-- | 1,2 |
| X | DE - B - S 5098 VIIId/21d1 (SIEMENS-SCHUCKERTWERKE)<br>bekannt gemacht 18.12.1952<br>* gesamtes Dokument *<br>-- | 1,2 |
| | DD - A - 10 066 (A. RÖCHER)<br>* Seite 2, Zeilen 17 bis 46 *<br><br>-- | 1,2 |
| | DD - A - 15 337 (A. PETERMANN)<br>* Seite 3, Zeilen 10 bis 50 *<br>-- | 1,2 |
| | CH - A5 - 564 876 (BROWN, BOVERI & CIE)<br>* Spalte 3, Zeile 17 und ff.<br>-- | 1 |
| A | AT - B - 99 879 (GANZ'SCHE ELECTRICITÄTS AG)<br>-- | |
| A | CH - A - 386 548 (BROWN, BOVERI & CIE)<br>---- | |

### KLASSIFIKATION DER ANMELDUNG (Int.Cl.3)

H 02 K 15/09

H 02 K 3/02

H 02 K 17/16

### RECHERCHIERTE SACHGEBIETE (Int. Cl.3)

H 02 K 3/00

H 02 K 15/00

H 02 K 17/00

### KATEGORIE DER GENANNTEN DOKUMENTE

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie. Übereinstimmendes Dokument

| X | Der vorliegende Recherchenbericht wurde für alle Patentansprüche erstellt. |
|---|---|

| Recherchenort | Abschlußdatum der Recherche | Prüfer |
|---|---|---|
| Berlin | 24-11-1980 | GESSNER |

EPA form 1503.1 06.78